# EUROPEAN PATENT APPLICATION

(11) **EP 2 940 661 A1**
(43) Date of publication of application: **04.11.2015**
(21) Application number: 13868752.0
(22) Date of filing: 05.07.2013
(51) Int. Cl.: G07C 9/00, H04N 7/18

(54) **VIDEO SURVEILLANCE PROCESSING METHOD AND DEVICE FOR SELF-SERVICE EQUIPMENT**

(30) Priority: 28.12.2012 CN 201210586122
(71) Applicant: GRG Banking Equipment Co., Ltd., Guangzhou, Guangdong 510663 (CN)
(72) Inventor: WANG, Qinghua, Guangzhou Guangdong 510663 (CN); DONG, Xuewen, Guangzhou Guangdong 510663 (CN); XIAO, Dahai, Guangzhou Guangdong 510663 (CN); XIE, Weiping, Guangzhou Guangdong 510663 (CN); YONG, Rong, Guangzhou Guangdong 510663 (CN)
(74) Representative: Maiwald Patentanwalts GmbH
(86) International application number: PCT/CN2013/078876
(87) International publication number: WO 2014/101385

(57) **Abstract**

A video surveillance processing method for self-service equipment includes the steps as follows: detecting whether any person is in a self-service area; if someone is in the self-service area, triggering a surveillance video system of the self-service equipment to record surveillance video, and storing the surveillance video recorded by the surveillance video system of the self-service equipment; and if no one is in the self-service area, enabling the surveillance video system of the self-service equipment to stop recording the surveillance video. Therefore, when no one is in the self-service area, the surveillance video system of the self-service equipment does not record the surveillance video, and is triggered to record the surveillance video only when there is someone in the self-service area, as a result, the recorded video data is effective as far as possible to reduce memory space; and the workload of querying a video record is reduced due to the reduction of invalid video data.

## Description

The present application claims the priority to Chinese Patent Application No.201210586122.4, entitled "VIDEO SURVEILLANCE PROCESSING METHOD AND DEVICE FOR SELF-SERVICE EQUIPMENT", filed on December 28, 2012 with the State Intellectual Property Office of People's Republic of China, which is incorporated herein by reference in its entirety.

### FIELD

The disclosure relates to the technical field of self-service devices, in particular to a video surveillance processing method and apparatus for a self-service device.

### BACKGROUND

Presently, a video surveillance system of a self-service device generally uses more than four paths of surveillance circuits to record surveillance video for the whole day. In a case that no person is in a service area, the video surveillance system of the self-service device still records surveillance video which has little value. For example, for surveillance video of a banknote outlet which is recorded by the video surveillance system of the self-service device, only portions recorded when cash is replenished for deposit or cash is dispensed for withdrawal are valuable, other portions are almost useless. If the surveillance video of the banknote outlet is recorded all day long, data volume is huge. Due to recorded video with low value, too much invalid data is stored in the video storage, thereby increasing storage space occupation of the video storage and causing huge data volume in the video storage.

Since invalid video data occupies a large portion of storage space, if a dedicated mass-storage is used to store surveillance video recorded by the self-service device, system overhead may increase. If the surveillance video recorded by the self-service device is stored in a cyclic storage manner, new generated data will overwrite previous data after the storage is full, thus the stored video would be stored for a shorten time period. Due to the shorten time period, when the storage is queried for a portion of the surveillance video needed by a client, the needed portion of the surveillance video, if overwritten by new generated video data, can not be found, which may cause loss for the client.

Hence, a video surveillance processing method for a self-service device is in urgent need, to reduce data volume for recorded surveillance video, thus reducing storage space occupation of surveillance video and improving efficiency for querying stored surveillance video.

### SUMMARY

The disclosure is to provide a video surveillance processing method for a self-service device for the purpose that valid video data is recorded as much as possible, and storage space occupation is reduced. The technical solutions are as follows.

A video surveillance processing method for a self-service device includes:
detecting whether there is any person in a self-service area;
triggering a video surveillance system of a self-service device to record surveillance video, and storing the surveillance video recorded by the video surveillance system of the self-service device, in a case that a person is detected in the self-service area; and
stopping, by the video surveillance system of the self-service device, recording surveillance video, in a case that no person is detected in the self-service area.

Preferably, the method further includes:
storing mark information for the video recorded by the video surveillance system of the self-service device, where the mark information is service information recorded by a service system of the self-service device when a user uses the self-service device for services, and the service information is used in rapid retrieval of surveillance video corresponding to the service information.

Preferably, the method further includes:
triggering a video surveillance subsystem for service device body and a video surveillance subsystem for user face in the video surveillance system of the self-service device to record surveillance video in a low frame frequency mode, in a case that a person is detected in the self-service area.

Preferably, the method further includes:
determining whether a distance between the person and the self-service device is in a preset distance range;
if the distance between the person and the self-service device is in the preset distance range, triggering the video surveillance subsystem for service device body to record surveillance video in a high frame frequency mode; and if the distance between the person and the self-service device is not in the preset distance range, keeping recording surveillance video in the low frame frequency mode by the video surveillance subsystem for service device body;
and/or the method further includes:
switching, by the video surveillance subsystem for user face, from the low frame frequency mode to the high frame frequency mode to record surveillance video, in a case that it is detected that the service system of the self-service device starts service processing; and keeping recording surveillance video in the low frame frequency mode by the video surveillance subsystem for user face, in a case that it is detected that the service system of the self-service device does not start service processing;
and/or the method further includes:
triggering a video surveillance subsystem for banknote outlet in the surveillance video system of the self-service device to record surveillance video in the high frame frequency mode, in a case that it is detected that a banknote outlet is about to be opened; and stopping recording surveillance video by the video surveillance subsystem for banknote outlet of a self-service device or recording surveillance video in the low frame frequency mode by the video surveillance subsystem for banknote outlet of the self-service device body, in a case that it is detected that the banknote outlet is not about to be opened.

Preferably, the method further includes:
detecting whether state of a safe box of the self-service device changes;
triggering a video surveillance system for safe box of the self-service device to record surveillance video in the high frame frequency mode, in a case that it is detected that the state of the safe box of the self-service device changes; and
stopping, by the video surveillance system for safe box of the self-service device, recording surveillance video, in a case that it is detected that the state of the safe box of the self-service device does not change.

A video surveillance processing apparatus for a self-service device includes:
a first detecting unit configured to detect whether there is any person in a self-service area;
a first triggering unit configured to trigger a video surveillance system of the self-service device to record surveillance video in a case that a person is detected in the self-service area;
a first storage unit configured to store the surveillance video recorded by the video surveillance system of the self-service device which is triggered by the first triggering unit; and
a second triggering unit configured to trigger the video surveillance system of the self-service device to stop recording surveillance video in a case that no person is detected in the self-service area.

Preferably, the apparatus further includes:
a second storage unit, configured to store mark information for the video recorded by the video surveillance system of the self-service device, where the mark information is service information recorded by a service system of the self-service device when a user uses the self-service device for services, and the service information is used in rapid retrieval of surveillance video corresponding to the service information.

Preferably, the first triggering unit is further configured to trigger a video surveillance subsystem for service device body and a video surveillance subsystem for user face in the video surveillance system of the self-service device to record surveillance video in a low frame frequency mode, in a case that a person is detected in the self-service area by the detecting unit.

Preferably, the apparatus further includes:
a determination unit configured to determine whether a distance between the person and the self-service device is in a preset distance range;
a third triggering unit configured to trigger the video surveillance subsystem for service device body to record surveillance video in a high frame frequency mode, in a case that the determination unit determines that the distance between the person and the self-service device is in the preset distance range;
and/or the apparatus further includes:
a second detecting unit configured to detect whether the service system of the self-service device starts service processing; and
a fourth triggering unit configured to trigger the video surveillance subsystem for user face to switch from the low frame frequency mode to the high frame frequency mode to record surveillance video, in a case the second detecting unit detects that the service system of the self-service device starts service processing;
and/or the apparatus further includes:
a third detecting unit configured to detect whether a banknote outlet of the self-service device body is about to be opened;
a fifth triggering unit configured to trigger a video surveillance subsystem for banknote outlet in the video surveillance system of the self-service device to record surveillance video in the high frame frequency mode, in a case that the third detecting unit detects that the banknote outlet is about to be opened; and
a sixth triggering unit, where in a case that the third detecting unit detects that the banknote outlet is not about to be opened, the sixth triggering unit triggers the video surveillance subsystem for banknote outlet of a self-service device to stop recording surveillance video, or, the fifth triggering unit triggers the video surveillance subsystem for banknote outlet of a self-service device body to record surveillance video in the low frame frequency mode.

Preferably, the apparatus further includes:
a fourth detecting unit configured to detect whether state of a safe box of the self-service device changes;
a seventh triggering unit configured to trigger a video surveillance system for safe box of the self-service device to record surveillance video in the high frame frequency mode, in a case that the fourth detecting unit detects that the state of the safe box of the self-service device changes; and
an eighth triggering unit configured to trigger the video surveillance system for safe box of the self-service device to stop recording surveillance video, in a case that the fourth detecting unit detects that the state of the safe box of the self-service device does not change.

Compared with conventional technology, the disclosure has following beneficial effects.

A video surveillance processing method for a self-service device is provided according to the disclosure, which includes: detecting whether there is any person in a self-service area; triggering a video surveillance system of the self-service device to record surveillance video in a case that a person is detected in the self-service area; stopping, by the video surveillance system of the self-service device, recording surveillance video, in a case that no person is detected in the self-service area; and storing the surveillance video recorded by the video surveillance system of the self-service device. Hence, in a case that no person is in the self-service area, the video surveillance system of the self-service device dose not record surveillance video, and in a case that a person is detected in the self-service area, the video surveillance system of the self-service device is triggered to record surveillance video, so as to record valid video data as much as possible, and reduce storage space occupation. Due to less invalid video data, video record is queried with less workload, and the recorded video may be stored in a video storage in a cyclic storage manner for a longer time, thereby improving probability for finding needed video. Furthermore, since less invalid video data is generated, less storage space is occupied, thereby reducing video system overhead when video is stored in a dedicated mass storage.

Furthermore, the video surveillance system communicates with a service system of the self-service device, and when a client performs service processing, corresponding video surveillance sub-system is triggered to record surveillance video, and mark information of the video recorded by the video surveillance devices of the self-service device is stored. Through the stored mark information, corresponding video surveillance record is easier to be queried, and video retrieval efficiency is improved while workload for querying surveillance video is reduced.

### BRIEF DESCRIPTION OF THE DRAWINGS

To describe the technical solutions for the embodiments of the present disclosure more clearly, the following briefly describes the drawings involved in the embodiments of the present disclosure. Apparently, the drawings described below are some embodiments, and persons of ordinary skill in the art can derive other drawings according to the drawings without any creative effort.
Figure 1 is a flow chart of a video surveillance processing method for a self-service device provided according to the disclosure;
Figure 2 is another flow chart of a video surveillance processing method for a self-service device provided according to the disclosure;
Figure 3 is yet another flow chart of a video surveillance processing method for a self-service device provided according to the disclosure;
Figure 4 is a structural diagram of a video surveillance processing apparatus for a self-service device provided according to the disclosure;
Figure 5 is another structural diagram of a video surveillance processing apparatus for a self-service device provided according to the disclosure; and
Figure 6 is yet another structural diagram of a video surveillance processing apparatus for a self-service device provided according to the disclosure.

### DETAILED DESCRIPTION

Technical solutions of the embodiments of the present disclosure will be illustrated completely and clearly with the drawings of the embodiments of the disclosure. Apparently, the described embodiments are merely a few rather than all of the embodiments of the present disclosure. All other embodiments obtained by persons of ordinary skill in the art based on the embodiments of the present disclosure without creative efforts shall fall within the protection scope of the present disclosure.

A video surveillance processing method for a self-service device is provided according to the disclosure, which includes: detecting whether there is any person in a self-service area, triggering a video surveillance system of the self-service device to record surveillance video and storing the surveillance video recorded by the video surveillance system of the self-service device in a case that a person is detected in the self-service area, and stopping, by the video surveillance system of the self-service device, recording surveillance video in a case that no person is detected in the self-service area. The video surveillance processing method for a self-service device provided according to the disclosure is illustrated in detail according to following embodiments.

### An Embodiment

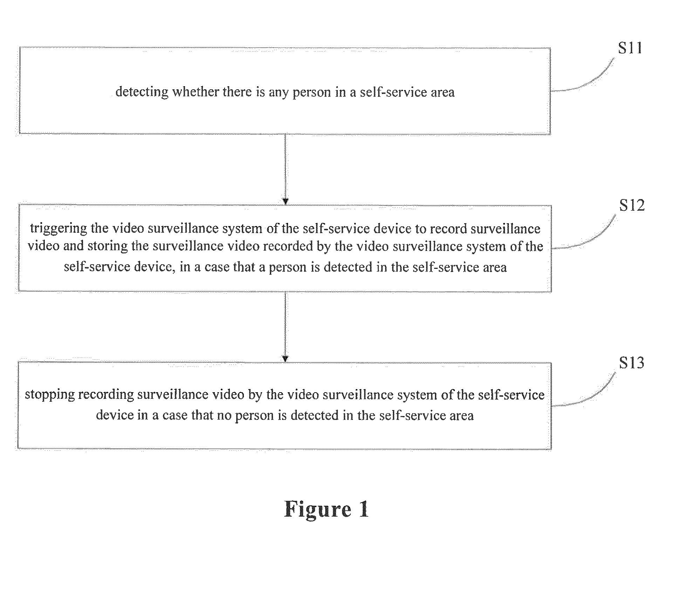

Figure 1 shows a flow chart of a video surveillance processing method for a self-service device provided according to the disclosure. The method may include following steps.

Step S11 includes: detecting whether there is any person in a self-service area.

According to the embodiment, the self-service area refers to an area range in which the video surveillance system of the self-service device is capable of performing surveillance when a user uses the self-service device. Operation of the video surveillance system of the self-service device is controlled according to the detection whether there is any person in the self-service area.

The video surveillance system of the self-service device includes a video surveillance subsystem for self-service device body, a video surveillance subsystem for user face, and a video surveillance subsystem for banknote outlet.

The video surveillance subsystem for self-service device body, the video surveillance subsystem for user face and the video surveillance subsystem for banknote outlet may operate in a shutdown mode, a low frame frequency mode or a high frame frequency mode. The video surveillance subsystem for self-service device body, the video surveillance subsystem for user face and the video surveillance subsystem for banknote outlet may operate in a same mode for a same case. For example, in a case that no person is detected in the self-service area, the video surveillance subsystem for self-service device body, the video surveillance subsystem for user face and the video surveillance subsystem for banknote outlet may operate in the shutdown mode or the low frame frequency mode. Of course, the video surveillance subsystem for self-service device body, the video surveillance subsystem for user face and the video surveillance subsystem for banknote outlet may operate in different modes for a same case.

The video surveillance subsystem for self-service device body is configured to monitor whether features of the self-service device body change, specially, monitor whether somebody installs foreign matter on the self-service device body, such as illegal advertisement and hardware modules for stealing user's card information and password, which may cause misoperation and economic loss of the user. The video surveillance subsystem for user face is configured to monitor user features, for example, biological features such as user face or pupil, of a user who uses the self-service device for services. The video surveillance subsystem for banknote outlet is configured to monitor state of a banknote outlet of the self-service device, such as open or close state.

According to the embodiment, an independent detecting apparatus separated from the video surveillance system of the self-service device may be used to detect whether there is any person in the self-service area. The independent detecting apparatus may perform continuous detection for 7*24 hours, and the detecting result may be directly transmitted to the video surveillance system of the self-service device without being stored.

Step S12 includes: triggering the video surveillance system of the self-service device to record surveillance video and storing the surveillance video recorded by the video surveillance system of the self-service device, in a case that a person is detected in the self-service area.

In a case that a person is detected in the self-service area, the independent detecting apparatus may trigger all subsystems in the video surveillance system of the self-service device to record surveillance video. Alternatively, in a case that a person is detected in the self-service area, the independent detecting apparatus may trigger some of the subsystems in the video surveillance system of the self-service device to record surveillance video. Specifically, the independent detecting apparatus may transmit a trigger signal to the video surveillance system of the self-service device, the video surveillance system of the self-service device then triggers its internal subsystems to record surveillance video. Different subsystems of the triggered video surveillance system of the self-service device may record surveillance video in different modes respectively.

After surveillance video is recorded by the video surveillance system of the self-service device, the surveillance video recorded by the video surveillance system of the self-service device is stored.

Step S 13 includes: stopping recording surveillance video by the video surveillance system of the self-service device in a case that no person is detected in the self-service area.

In a case that no person is detected in the self-service area, the video surveillance system of the self-service device, upon receiving a signal which indicates stopping recording surveillance video, stops recording surveillance video. In other words, according to the embodiment, in a case that no person is in the self-service area, the video surveillance system of the self-service device is in the shutdown mode.

In above steps of the method, the video surveillance system of the self-service device itself may be used as a detecting apparatus to detect whether there is any person in the self-service area. In a case that the video surveillance system of the self-service device is used as the detecting apparatus, the video surveillance system of the self-service device operates in the low frame frequency mode in a case that no person is in the self-service area, and switches to the high frame frequency mode to record surveillance video in a case that a person is detected in the self-service area. In a case that no person is detected in the self-service area, the video surveillance system of the self-service device stops recording surveillance video in the high frame frequency mode.

In above steps of the method, in a case that no person is in the self-service area, the video surveillance system of the self-service device dose not record surveillance video, and in a case that a person is in the self-service area, the video surveillance system of the self-service device is triggered to record surveillance video, so as to record valid video data as much as possible, and reduce storage space occupation.

Due to less invalid video data, video record is queried with less workload, and the recorded video may be stored in a video storage in a cyclic storage manner for a longer time, thereby improving probability for finding needed video. Furthermore, since less invalid video data is generated, less storage space is occupied, thereby reducing video system overhead when video is stored in a dedicated mass storage.

### Another Embodiment

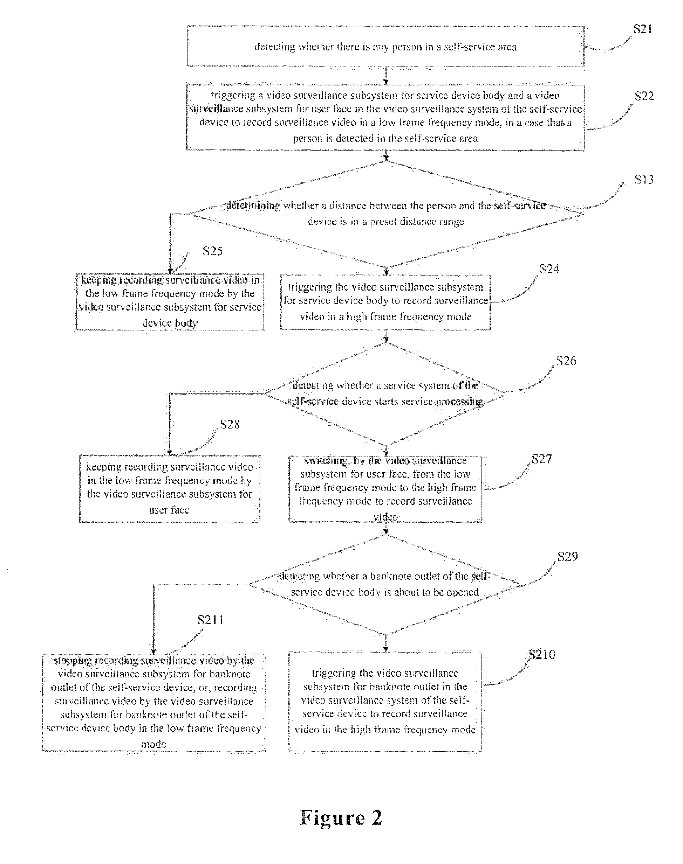

Figure 2 shows another flow chart of a video surveillance processing method for a self-service device provided according to the disclosure. The general description of the video surveillance processing method for a self-service device is set forth by referring to the embodiment shown in Figure 1, and in this embodiment, the video surveillance processing method for a self-service device is described in detail in terms of the subsystems in the video surveillance system of the self-service device by following operation process of the self-service device.

The video surveillance processing method for a self-service device shown in Figure 2 may include following steps.

Step S21 includes: detecting whether there is any person in a self-service area.

Step S21 is the same as step S11 of the video surveillance processing method for a self-service device shown in Figure 1, and is not described herein.

Step S22 includes: triggering a video surveillance subsystem for service device body and a video surveillance subsystem for user face in the video surveillance system of the self-service device to record surveillance video in a low frame frequency mode, in a case that a person is detected in the self-service area.

In a case that a person is detected in the self-service area, the video surveillance subsystem for service device body and the video surveillance subsystem for user face in the video surveillance system of the self-service device are triggered to record surveillance video in the low frame frequency mode, i.e., the video surveillance subsystem for service device body and the video surveillance subsystem for user face switch from a shutdown mode to the low frame frequency mode.

In the low frame frequency mode, surveillance video is recorded with low image collecting frequency, and the recorded surveillance video has small data volume and occupies small storage space. In a case that there is a person in the self-service area and it is uncertain whether the person would use the self-service device for services, the demand for the picture resolution of the recorded video is not high, thus the video surveillance subsystem for service device body and the video surveillance subsystem for user face may record surveillance video in the low frame frequency mode.

Step S23: determining whether a distance between the person and the self-service device is in a preset distance range.

After a person is detected in the self-service area and the video surveillance subsystem for service device body and the video surveillance subsystem for user face in the video surveillance system of the self-service device start recording surveillance video in the low frame frequency mode, i.e., after step S22 is executed, it is determined whether the distance between the person in the self-service area and the self-service device is in the preset distance range; if the distance between the person in the self-service area and the self-service device is in the preset distance range, step S24 is executed, and if the distance between the person in the self-service area and the self-service device is not in the preset distance range, step S25 is executed.

Step S24 includes: triggering the video surveillance subsystem for service device body to record surveillance video in a high frame frequency mode.

If the distance between the person in the self-service area and the self-service device is in the preset distance range, the video surveillance subsystem for service device body is triggered to record surveillance video in the high frame frequency mode, i.e., the video surveillance subsystem for service device body switches from the low frame frequency mode to the high frame frequency mode to record surveillance video,

The preset distance range may be set to be from 1.5 meters to 2 meters.

In a case that it is detected that the distance between the person in the self-service area and the self-service device is in the preset distance range, i.e., the person in the self-service area is close to the self-service device, the surveillance needs to focus on the self-service device body, i.e., the video surveillance subsystem for service device body records surveillance video for the self-service device body in the high frame frequency mode, to monitor whether foreign matter is installed on the self-service device.

In the high frame frequency mode, surveillance video is recorded with high image collecting frequency, and the recorded video data, although having large data volume and occupying large storage space, but has clear pictures with high resolution. The surveillance video recorded in the high frame frequency mode has high definition, and through the high definition video, which is recorded by the video surveillance subsystem for service device body in the high frame frequency mode, it may be clearly recognized whether the foreign body is installed on the self-service device.

Step S25 includes: keeping recording surveillance video in the low frame frequency mode by the video surveillance subsystem for service device body.

After step S23 is executed, if it is determined that the distance between the person in the self-service area and the self-service device goes beyond the preset distance range, the video surveillance subsystem for service device body still records surveillance video in the low frame frequency mode. The person in the self-service area, who is not in the preset distance range, does not threaten the self-service device body, therefore the video surveillance subsystem for service device body may keep recording surveillance video in the low frame frequency mode without switching to the high frame frequency mode to record surveillance video.

Step S26: detecting whether a service system of the self-service device starts service processing.

According to the embodiment, the service system of the self-service device communicates with the video surveillance subsystem for user face; after step S24 is executed, it is detected whether the service system of the self-service device starts service processing, i.e., it is detected whether a user using the self-service device inserts a bank card or whether the user using the self-service device selects a card/bankbook-free service. If the service system of the self-service device starts service processing, step S27 is executed, and if the service system of the self-service device does not start service processing, step S28 is executed.

Step S27 includes: switching, by the video surveillance subsystem for user face, from the low frame frequency mode to the high frame frequency mode to record surveillance video, in a case that it is detected that the service system of the self-service device starts service processing.

In a case that it is detected that the service system of the self-service device starts service processing, the service system of the self-service device may transmit information to the video surveillance subsystem for user face to require the video surveillance subsystem for user face to record surveillance video in the high frame frequency mode. After receiving a message transmitted by the service system of the self-service device, the video surveillance subsystem for user face may switch from the low frame frequency mode to the high frame frequency mode to record surveillance video.

Step S28 includes: keeping recording surveillance video in the low frame frequency mode by the video surveillance subsystem for user face, in a case that it is detected that the service system of the self-service device does not start service processing.

In a case that the service system of the self-service device does not start service processing, i.e., the user does not insert a bank card or the user dose not select a card/bankbook-free service, the user is not processing service and will not suffer property loss, therefore the video surveillance subsystem for user face may keep recording surveillance video in the low frame frequency mode without recording surveillance video in the high frame frequency mode.

Step S29 includes: detecting whether a banknote outlet of the self-service device body is about to be opened.

After step S27 is executed, i.e., after the service system of the self-service device starts service processing, it is detected whether the banknote outlet of the self-service device body is about to be opened, i.e., it is detected whether the service processing proceeds to the point that the service system of the self-service device is about to dispense cash or is preparing for deposit.

Step S210 includes: triggering the video surveillance subsystem for banknote outlet in the video surveillance system of the self-service device to record surveillance video in the high frame frequency mode, in a case that it is detected that the banknote outlet is about to be opened.

In a case that it is detected that the banknote outlet is about to be opened, i.e., the service processing proceeds to the point that the service system of the self-service device is about to dispense banknote or is preparing for deposit, the service system of the self-service device transmit a message to the video surveillance subsystem for banknote outlet to require the video surveillance subsystem for banknote outlet to record surveillance video in the high frame frequency mode, thereby focusing the surveillance on the banknote outlet.

Step S211 includes: stopping recording surveillance video by the video surveillance subsystem for banknote outlet of the self-service device, or, recording surveillance video by the video surveillance subsystem for banknote outlet of the self-service device body in the low frame frequency mode, in a case that it is detected that the banknote outlet is not about to be opened.

In a case that it is detected that the banknote outlet is not about to be opened, i.e., it is detected that the service system of the self-service device is not about to dispense banknote or is not preparing for deposit by following the service process, the service system of the self-service device may not transmit a message to the video surveillance subsystem for banknote outlet to require the video surveillance subsystem for banknote outlet to record surveillance video in the high frame frequency mode, and the video surveillance subsystem for banknote outlet only needs recording surveillance video in the low frame frequency mode or closing or stops recording surveillance video.

The recorded surveillance video in above steps are stored, the video surveillance system of the self-service device may also mark the stored surveillance video and store the mark information, and the stored mark information is used in retrieving the stored surveillance video corresponding to the mark information. The mark information may be service information which is recorded by the service system of the self-service device when the user uses the self-service device for services, such as card number information of the user or serial number of the service processed by the service system of the self-service device. The service information recorded by the service system of the self-service device is used to mark the stored surveillance video, i.e., the service information recorded by the service system of the self-service device is bound with the stored surveillance video, thus the surveillance video corresponding to the service information can be rapidly retrieved through the service information recorded by the service system of the self-service device.

### Another Embodiment

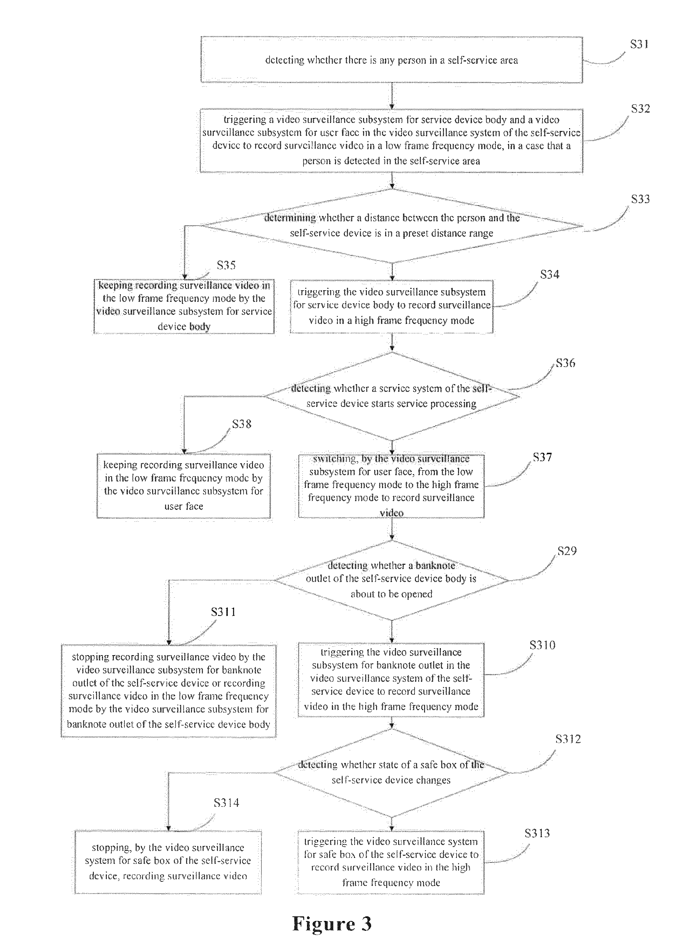

Figure 3 shows another flow chart of a video surveillance processing method for a self-service device provided according to the disclosure. The video surveillance processing method for a self-service device is illustrated in conjunction with subsystems in the video surveillance system of the self-service device in terms of the operation process of the self-service device according to the embodiment shown in Figure 2. Besides the subsystems in the video surveillance system of the self-service device, the video surveillance processing method for a self-service device is further described in detail in conjunction with a video surveillance system for safe box of the self-service device in terms of the operation process of the self-service device.

The video surveillance processing method for a self-service device shown in Figure 3 may include following steps.

Step S31 includes: detecting whether there is any person in a self-service area.

Step S32 includes: triggering a video surveillance subsystem for service device body and a video surveillance subsystem for user face in the video surveillance system of the self-service device to record surveillance video in a low frame frequency mode, in a case that a person is detected in the self-service area.

Step S33: determining whether a distance between the person and the self-service device is in a preset distance range.

Step S34 includes: if the distance between the person and the self-service device is in the preset distance range, triggering the video surveillance subsystem for service device body to record surveillance video in a high frame frequency mode.

Step S35 includes: keeping recording surveillance video in the low frame frequency mode by the video surveillance subsystem for service device body.

Step S36: detecting whether a service system of the self-service device starts service processing.

Step S37 includes: switching, by the video surveillance subsystem for user face, from the low frame frequency mode to the high frame frequency mode to record surveillance video, in a case that it is detected that the service system of the self-service device starts service processing.

Step S38 includes: keeping recording surveillance video in the low frame frequency mode by the video surveillance subsystem for user face, in a case that it is detected that the service system of the self-service device does not start service processing.

Step S39 includes: detecting whether a banknote outlet of the self-service device body is about to be opened.

Step S310 includes: triggering the video surveillance subsystem for banknote outlet in the video surveillance system of the self-service device to record surveillance video in the high frame frequency mode, in a case that it is detected that the banknote outlet is about to be opened.

Step S311 includes: stopping recording surveillance video by the video surveillance subsystem for banknote outlet of the self-service device or recording surveillance video in the low frame frequency mode by the video surveillance subsystem for banknote outlet of the self-service device body, in a case that it is detected that the banknote outlet is not about to be opened.

Step S31 to step S311 are the same as step S21 to S211 of the video surveillance processing method for a self-service device shown in Figure 2, and are not described herein.

Step 312 includes: detecting whether state of a safe box of the self-service device changes.

The purpose for detecting whether state of a safe box of the self-service device changes is mainly to detect whether a maintainer of the self-service device is about to perform cash maintenance or whether the safe box suffers violent attack from an outside person.

Step S313 includes: triggering the video surveillance system for safe box of the self-service device to record surveillance video in the high frame frequency mode, in a case that it is detected that the state of the safe box of the self-service device changes.

In a case that the self-service device switches to a maintenance mode, i.e., the maintainer is about to perform cash maintenance, it is meant that the state of the safe box of the self-service device is about to change, and in this case, the video surveillance system for safe box of the self-service device needs to be triggered to record surveillance video in the high frame frequency mode. Alternatively, if the safe box of the self-service device suffers violent attack from the outside person, i.e., the state of the safe box of the self-service device changes, the video surveillance system for safe box of the self-service device also needs to be triggered to record surveillance video in the high frame frequency mode, to focus the surveillance on the safe box of the self-service device.

Step S314 includes: stopping, by the video surveillance system for safe box of the self-service device, recording surveillance video, in a case that it is detected that the state of the safe box of the self-service device does not change.

In a case that the state of the safe box of the self-service device does not change, the video surveillance system for safe box of the self-service device stops recording surveillance video, and switches to an initial operation mode, such as a shutdown mode or the low frame frequency mode.

The surveillance video recorded in above steps is stored and is marked, the mark information is stored, and the stored mark information is used to retrieve the stored surveillance video corresponding to the mark information. The mark information may be service information which is recorded by the service system of the self-service device when the user uses the self-service device for services, such as card number information of the user or serial number of service processed by the service system of the self-service device. The service information recorded by the service system of the self-service device is used to mark the stored surveillance video, i.e., the service information recorded by the service system of the self-service device is bound with the stored surveillance video, thus the surveillance video corresponding to the service information can be rapidly retrieved through the service information recorded by the service system of the self-service device,.

According to the embodiment, valid video is recorded as much as possible and storage space occupation of the self-service device is reduced. Furthermore, the video surveillance system communicates with the service system of the self-service device, and when a client performs service processing, corresponding video surveillance devices are triggered to record surveillance video, and mark information of the video recorded by the video surveillance devices of the self-service device is stored. Through the stored mark information, corresponding video surveillance record is easier to be queried, and video retrieval efficiency is improved while workload for querying surveillance video is reduced.

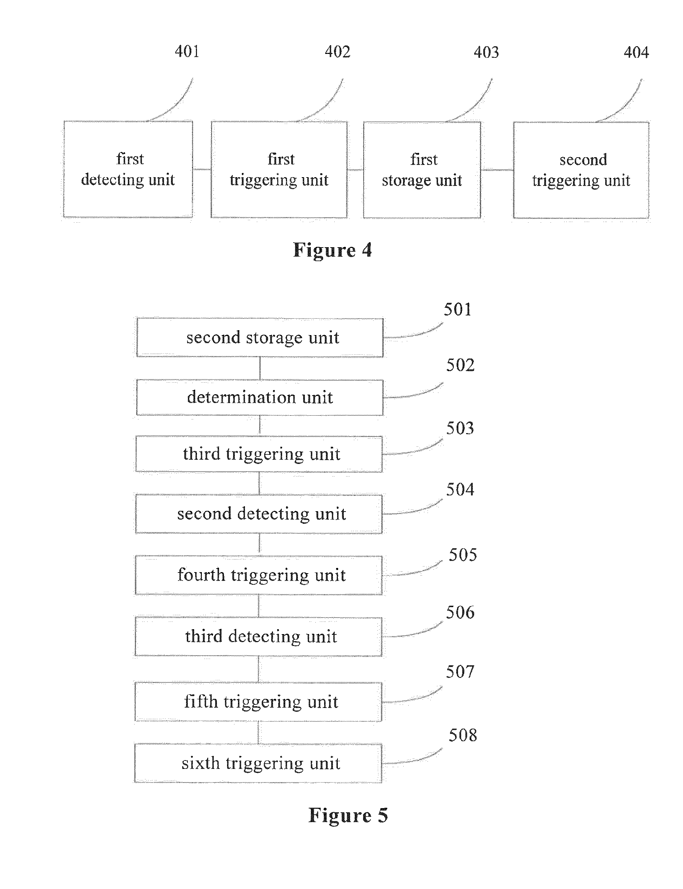

Corresponding to the video surveillance processing method for a self-service device according to the embodiment shown in Figure 1, a structural diagram of a video surveillance processing apparatus for a self-service device is further provided according to the disclosure. Referring to Figure 4, the video surveillance processing apparatus for a self-service device includes: a first detecting unit 401, a first triggering unit 402, a first storage unit 403, and a second triggering unit 404.

The first detecting unit 401 is configured to detect whether there is any person in a self-service area.

According to the embodiment, the self-service area refers to an area range in which the video surveillance system of the self-service device is capable of performing surveillance when a user uses the self-service device. Operation of the video surveillance system of the self-service device is controlled according to the detection whether there is any person in the self-service area.

According to the embodiment, the first detecting unit 401 may be an independent detecting apparatus configured to detect whether there is any person in the self-service area.

The first triggering unit 402 is configured to trigger the video surveillance system of the self-service device to record surveillance video in a case that a person is detected in the self-service area.

In a case that a person is detected in the self-service area, the first triggering unit 402 may trigger all subsystems in the video surveillance system of the self-service device to record surveillance video. Alternatively, in a case that a person is detected in the self-service area, some of the subsystems in the video surveillance system of the self-service device may be triggered to record surveillance video. Specifically, the first triggering unit 402 may transmit a trigger signal to the video surveillance system of the self-service device, then the video surveillance system of the self-service device triggers its internal subsystems to record surveillance video. Different subsystems of the triggered video surveillance system of the self-service device may record surveillance video in different modes respectively.

According to the embodiment, the first triggering unit 402 may be an independent detecting apparatus.

The first storage unit 403 is configured to store surveillance video recorded by the video surveillance system of the self-service device which is triggered by the first triggering unit 402.

After surveillance video is recorded by the video surveillance system of the self-service device which is triggered by the first triggering unit 402, the surveillance video recorded by the video surveillance system of the self-service device is stored. According to the embodiment, the video surveillance system of the self-service device may also mark the stored surveillance video and store the mark information, and the stored mark information is used to retrieve the stored surveillance video corresponding to the mark information.

The second triggering unit 403 is configured to trigger the video surveillance system of the self-service device to stop recording surveillance video in a case that no person is detected by the first detecting unit 401 in the self-service area.

In a case that no person is detected by the first detecting unit 401 in the self-service area, the video surveillance system of the self-service device receives from the second triggering unit 403 a trigger signal which indicates stopping recording surveillance video, and stops recording surveillance video. In other words, according to the embodiment, in a case that no person is in the self-service area, the video surveillance system of the self-service device is in the shutdown mode.

### Another embodiment

According to the embodiment, another video surveillance processing apparatus for a self-service device is proposed as an extension of the video surveillance processing apparatus for a self-service device shown in Figure 4, and a constitution thereof is shown in Figure 5. The first triggering unit 402 is configured to trigger a video surveillance subsystem for service device body and a video surveillance subsystem for user face in the video surveillance system of the self-service device to record surveillance video in a low frame frequency mode, in a case that a person is detected in the self-service area. Figure 5 is another structural diagram of a video surveillance processing apparatus for a self-service device provided according to the disclosure. The device, based on the video surveillance processing apparatus for a self-service device shown in Figure 4, further includes:

a second storage unit 501, a determination unit 502, a third triggering unit 503, a second detecting unit 504, a fourth triggering unit 505, a third detecting unit 506, a fifth triggering unit 507, and a sixth triggering unit 508.

The second storage unit 501 is configured to store mark information for the video recorded by the video surveillance system of the self-service device, where the mark information is service information recorded by a service system of the self-service device when a user uses the self-service device for services.

The video surveillance system of the self-service device may mark the stored surveillance video and store the mark information, and the stored mark information is used to retrieve the stored surveillance video corresponding to the mark information. The mark information may be service information which is recorded by the service system of the self-service device when the user uses the self-service device for services, such as card number information of the user or serial number of service processed by the service system of the self-service device. The service information recorded by the service system of the self-service device is used to mark the stored surveillance video, i.e., the service information recorded by the service system of the self-service device is bound with the stored surveillance video, thus the surveillance video corresponding to the service information can be rapidly retrieved through the service information recorded by the service system of the self-service device.

The determination unit 502 is configured to determine whether a distance between the person and the self-service device is in a preset distance range.

After a person is detected in the self-service area by the first detecting unit 401, and the video surveillance subsystem for service device body and the video surveillance subsystem for user face in the video surveillance system of the self-service device are triggered to record surveillance video in the low frame frequency mode, it is determined whether the distance between the person in the self-service area and the self-service device is in the preset distance range; if the distance between the person in the self-service area and the self-service device is in the preset distance range, the third triggering unit 503 is triggered, and if the distance between the person in the self-service area and the self-service device is not in the preset distance range, no unit is triggered.

The third triggering unit 503 is configured to trigger the video surveillance subsystem for service device body to record surveillance video in the high frame frequency mode, in a case that the determination unit 502 determines that the distance between the person and the self-service device is in the preset distance range.

If the determination unit 502 determines that the distance between the person and the self-service device is in the preset distance range, the video surveillance subsystem for service device body is triggered to record surveillance video in the high frame frequency mode.

The second detecting unit 504 is configured to detect whether the service system of the self-service device starts service processing.

After the third triggering unit 503 triggers the video surveillance subsystem for service device body to record surveillance video in the high frame frequency mode, it is detected whether the service system of the self-service device starts service processing, i.e., it is detected whether a user of the self-service device inserts a bank card or whether the user of the self-service device selects a card/bankbook-free service.

The fourth triggering unit 505 is configured to trigger the video surveillance subsystem for user face to switch from the low frame frequency mode to the high frame frequency mode to record surveillance video in a case that the second detecting unit 504 detects that the service system of the self-service device starts service processing.

In a case that the second detecting unit 504 detects that the service system of the self-service device starts service processing, the service system of the self-service device may transmit information to the video surveillance subsystem for user face to require the video surveillance subsystem for user face to record surveillance video in the high frame frequency mode. After receiving the message transmitted by the service system of the self-service device, the video surveillance subsystem for user face is triggered to switch from the low frame frequency mode to the high frame frequency mode to record surveillance video.

The third detecting unit 506 is configured to detect whether a banknote outlet of the self-service device body is about to be opened.

After the fourth triggering unit 505 triggers the video surveillance subsystem for user face to switch from the low frame frequency mode to the high frame frequency mode to record surveillance video, it is detected whether the banknote outlet of the self-service device body is about to be opened, i.e., it is detected whether the service processing proceeds to the point that the service system of the self-service device is about to dispense banknote or is preparing for deposit.

The fifth triggering unit 507 is configured to trigger a video surveillance subsystem for banknote outlet in the video surveillance system of the self-service device to record surveillance video in the high frame frequency mode, in a case that it is detected by the third detecting unit 506 that the banknote outlet is about to be opened.

In a case that the third detecting unit 506 detects that the banknote outlet is about to be opened, the service system of the self-service device transmits a message to the fifth triggering unit 507 to trigger the video surveillance subsystem for banknote outlet to record surveillance video in the high frame frequency mode, thereby focusing the surveillance on the banknote outlet.

In a case that the third detecting unit 506 detects that the banknote outlet is not about to be opened, the sixth triggering unit 508 triggers the video surveillance subsystem for banknote outlet of the self-service device to stop recording surveillance video, or the fifth triggering unit triggers the video surveillance subsystem for banknote outlet of the self-service device body to record surveillance video in the low frame frequency mode.

In a case that the third detecting unit 506 detects that the banknote outlet is not about to be opened, i.e., it is detected that the service processing does not proceed to the point that the service system of the self-service device is about to dispense banknote or is preparing for deposit, the service system of the self-service device may not transmit a message to the video surveillance subsystem for banknote outlet to require the video surveillance subsystem for banknote outlet to record surveillance video in the high frame frequency mode, and the video surveillance subsystem for banknote outlet only needs recording surveillance video in the low frame frequency mode or shutting down, i.e., stopping recording surveillance video.

### Another Embodiment

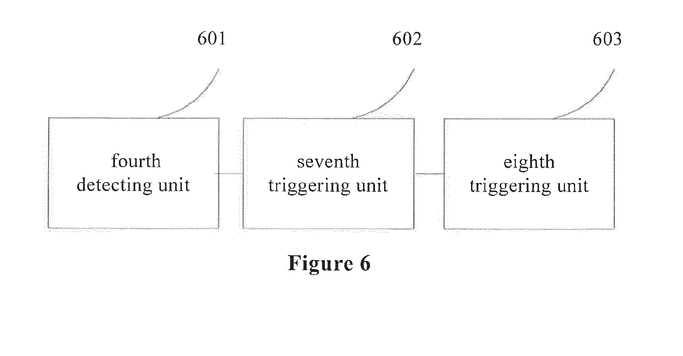

According to the embodiment, another video surveillance processing apparatus for a self-service device is proposed as an extension based on the video surveillance processing apparatus for a self-service device shown in Figure 5, and a constitution thereof is shown in Figure 6. Figure 6 is another structural diagram of a video surveillance processing apparatus for a self-service device provided according to the disclosure. The device, based on the video surveillance processing apparatus for a self-service device shown in Figure 5, further includes:

a fourth detecting unit 601, a seventh triggering unit 602 and an eighth trigger unit 603.

The fourth detecting unit 601 is configured to detect whether state of a safe box of the self-service device changes.

The purpose for detecting whether state of a safe box of the self-service device changes is mainly to detect whether a maintainer of the self-service device is about to perform cash maintenance or whether the safe box suffers violent attack from an outside person.

The seventh triggering unit 602 is configured to trigger a video surveillance system for safe box of the self-service device to record surveillance video in the high frame frequency mode, in a case that the fourth detecting unit 601 detects that the state of the safe box of the self-service device changes.

In a case that the self-service device switches to a maintenance mode, i.e., the maintainer is about to perform cash maintenance, it is meant that the state of the safe box of the self-service device is about to change, and in this case, the video surveillance system for safe box of the self-service device needs to be triggered to record surveillance video in the high frame frequency mode. Alternatively, in a case that the safe box of the self-service device suffers violent attack from the outside person, i.e., the state of the safe box of the self-service device changes, the video surveillance system for safe box of the self-service device also needs to be triggered to record surveillance video in the high frame frequency mode, to focus the surveillance on the safe box of the self-service device.

The eighth trigger unit 603 is configured to trigger the video surveillance system for safe box of the self-service device to stop recording surveillance video, in a case that the fourth detecting unit detects that the state of the safe box of the self-service device does not change.

In a case that the fourth detecting unit 601 detects that the state of the safe box of the self-service device does not change, the video surveillance system for safe box of the self-service device stops recording surveillance video, and switches to an initial operation mode, such as the shutdown mode or the low frame frequency mode.

It should be noted that the embodiments of the present disclosure are described in a progressive manner, and each embodiment places emphasis on the difference from other embodiments, therefore, one embodiment can refer to other embodiments for the same or similar parts. For the embodiments of the device, since the embodiments of the device or the system are very similar to the embodiments of the method, the description is relatively concise, and relative description refers to parts of description of the embodiments of the method.

Finally, it should be also noted that relationship terms such as "the first" and "the second" herein are only used to distinguish one entity or operation from another, and does not necessarily require or imply that there is an actual relationship or sequence between these entities or operations. Furthermore, terms of "include", "comprise" or any other variations are intended to cover non-exclusive inclusion, so that a process, a method, an object or a device including a series of elements not only include those elements, but also include other elements not explicitly listed, or also include inherent elements of the process, the method, the object or the device. Unless stated otherwise, defining in a sentence of "include a..." element does not exclude a case that there is also another same element in the process, the method, the object or the device including the described element.

In the foregoing, a video surveillance processing method and apparatus of a self-service device provided according to the disclosure are described in detail. The principle and embodiments of the disclosure are illustrated with specific examples, and the illustration of the embodiments is only to help understanding the method and the core idea of the disclosure. Meanwhile, for those skilled in the art, some modifications may be made to the embodiments and application scope based on the spirit of the disclosure. In conclusion, the content of the specification should not be understood as a limitation to the disclosure.

## Claims

1. A video surveillance processing method for a self-service device, comprising
detecting whether there is any person in a self-service area;
triggering a video surveillance system of the self-service device to record surveillance video and storing the surveillance video recorded by the video surveillance system of the self-service device, in a case that a person is detected in the self-service area; and
stopping, by the video surveillance system of the self-service device, recording surveillance video, in a case that no person is detected in the self-service area.

2. The method according to claim 1, further comprising
storing mark information for the video recorded by the video surveillance system of the self-service device, wherein the mark information is service information recorded by a service system of the self-service device when a user uses the self-service device for services, and the service information is used in rapid retrieval of surveillance video corresponding to the service information.

3. The method according to claim 2, comprising
triggering a video surveillance subsystem for service device body and a video surveillance subsystem for user face in the video surveillance system of the self-service device to record surveillance video in a low frame frequency mode, in a case that a person is detected in the self-service area.

4. The method according to claim 3, further comprising
determining whether a distance between the person and the self-service device is in a preset distance range;
if the distance between the person and the self-service device is in the preset distance range, triggering the video surveillance subsystem for service device body to record surveillance video in a high frame frequency mode; and if the distance between the person and the self-service device is not in the preset distance range, keeping recording surveillance video in the low frame frequency mode by the video surveillance subsystem for service device body;
and/or further comprising:
switching, by the video surveillance subsystem for user face, from the low frame frequency mode to the high frame frequency mode to record surveillance video, in a case that it is detected that the service system of the self-service device starts service processing; and keeping recording surveillance video in the low frame frequency mode by the video surveillance subsystem for user face, in a case that it is detected that the service system of the self-service device does not start service processing;
and/or further comprising:
triggering a video surveillance subsystem for banknote outlet of the self-service device in the surveillance video system of the self-service device to record surveillance video in the high frame frequency mode, in a case that it is detected that the banknote outlet is about to be opened; and stopping recording surveillance video by the video surveillance subsystem for banknote outlet of a self-service device or recording surveillance video in the low frame frequency mode by the video surveillance subsystem for banknote outlet of the self-service device body, in a case that it is detected that the banknote outlet is not about to be opened.

5. The method according to any one of claims 1-4, further comprising:
detecting whether state of a safe box of the self-service device changes;
triggering a video surveillance system for safe box of the self-service device to record surveillance video in the high frame frequency mode, in a case that it is detected that the state of the safe box of the self-service device changes;
stopping, by the video surveillance system for safe box of the self-service device, recording surveillance video, in a case that it is detected that the state of the safe box of the self-service device does not change.

6. A video surveillance processing apparatus for a self-service device, comprising
a first detecting unit configured to detect whether there is any person in a self-service area;
a first triggering unit configured to trigger a video surveillance system of a self-service device to record surveillance video in a case that a person is detected in the self-service area;
a first storage unit configured to store the surveillance video recorded by the video surveillance system of the self-service device which is triggered by the first triggering unit; and
a second triggering unit configured to trigger the video surveillance system of the self-service device to stop recording surveillance video in a case that no person is detected in the self-service area.

7. The apparatus according to claim 6, further comprising
a second storage unit, configured to store mark information for the video recorded by the video surveillance system of the self-service device, wherein the mark information is service information recorded by a service system of the self-service device when a user uses the self-service device for services, and the service information is used in rapid retrieval of surveillance video corresponding to the service information.

8. The apparatus according to claim 7, wherein the first triggering unit is further configured to trigger a video surveillance subsystem for service device body and a video surveillance subsystem for user face in the video surveillance system of the self-service device to record surveillance video in a low frame frequency mode, in a case that a person is detected in the self-service area.

9. The apparatus according to claim 8, further comprising
a determination unit configured to determine whether a distance between the person and the self-service device is in a preset distance range;
a third triggering unit configured to trigger the video surveillance subsystem for service device body to record surveillance video in the high frame frequency mode, in a case that the determination unit determines that the distance between the person and the self-service device is in the preset distance range;
and/or further comprising:
a second detecting unit configured to detect whether the service system of the self-service device starts service processing;
a fourth triggering unit configured to trigger the video surveillance subsystem for user face to switch from the low frame frequency mode to the high frame frequency mode to record surveillance video in a case that it is detected that the service system of the self-service device starts service processing.
and/or further comprising:
a third detecting unit configured to detect whether a banknote outlet of the self-service device body is about to be opened;
a fifth triggering unit configured to trigger the video surveillance subsystem for banknote outlet of the self-service device in the video surveillance system of the self-service device to record surveillance video in the high frame frequency mode, in a case that it is detected that the banknote outlet is about to be opened; and
a sixth triggering unit, wherein in a case that the third detecting unit detects that the banknote outlet is not about to be opened, the sixth triggering unit triggers the video surveillance subsystem for banknote outlet of the self-service device to stop recording surveillance video, or, the fifth triggering unit triggers the video surveillance subsystem for banknote outlet of the self-service device body to record surveillance video in the low frame frequency mode.

10. The apparatus according to any one of claims 6-9, further comprising:
a fourth detecting unit configured to detect whether state of a safe box of the self-service device changes;
a seventh triggering unit configured to trigger a video surveillance system for safe box of the self-service device to record surveillance video in the high frame frequency mode, in a case that it is detected that the state of the safe box of the self-service device changes; and
an eighth triggering unit configured to trigger the video surveillance system for safe box of the self-service device to stop recording surveillance video, in a case that the fourth detecting unit detects that the state of the safe box of the self-service device does not change.
